Europäisches Patentamt

European Patent Office

Office européen des brevets

(11) Veröffentlichungsnummer: **0 163 069**

**A1**

(12) **EUROPÄISCHE PATENTANMELDUNG**

(21) Anmeldenummer: **85104127.7**

(22) Anmeldetag: **04.04.85**

(51) Int. Cl.⁴: **G 01 P 13/00**

(30) Priorität: **16.04.84 DE 3414341**

(43) Veröffentlichungstag der Anmeldung:
**04.12.85 Patentblatt 85/49**

(84) Benannte Vertragsstaaten:
**DE FR GB IT SE**

(71) Anmelder: **ASEA GmbH**

**D-6360 Friedberg(DE)**

(72) Erfinder: **Schucker, Josef**
**Brunnenstrasse 1**
**D-6361 Kaichen(DE)**

(74) Vertreter: **Boecker, Joachim, Dr.-Ing.**
**Rathenauplatz 2-8**
**D-6000 Frankfurt a.M. 1(DE)**

(54) Verfahren und Anordnung zur Feststellung des ungehinderten und blasenfreien Strömens einer unter Druck stehenden Flüssigkeit.

(57) Verfahren und Anordnung zur Feststellung des ungehinderten und blasenfreien Strömens einer unter Druck stehenden Flüssigkeit, insbesondere einer zähen Flüssigkeit, wie z.B. Klebstoff. Die Flüssigkeit durchfließt dabei ein Konstruktionsteil, z.B. ein Düsenrohr, das mit einer Austrittsöffnung versehen ist. Gemäß der Erfindung wird in der Wand des Konstruktionsteils (2) mindestens ein Meßsondenkanal (5) vorgesehen, der den in der Flüssigkeit herrschenden Druck mittels eines Drucksensors abtastet. Das Ausgangssignal wird entweder zerlegt in kurzfristige Signalstöße, welche Gasblasen indizieren, und eine sich relativ langsam ändernde kontinuierliche Komponente, welche das Fließen der Flüssigkeit indiziert, oder es werden zwei Drucksensoren mit verschiedenen Ansprechcharakteristiken verwendet.

Fig.1

0163069

ASEA GmbH
5340 Bad Honnef / Bundesrepublik Deutschland

Verfahren und Anordnung zur Feststellung des ungehinderten
und blasenfreien Strömens einer unter Druck stehenden
Flüssigkeit

Die vorliegende Erfindung betrifft ein Verfahren und eine Durchführungsanordnung zur Feststellung des ungehinderten und blasenfreien Strömens einer unter Druck stehenden Flüssigkeit gemäß dem Oberbegriff des Anspruches 1.

In der Technik kommt es häufig vor, daß eine zähe Flüssigkeit, z.B. Klebstoff oder flüssiger Kunststoff, auf ihrem Verarbeitungswege unter hohem Druck ein Konstruktionsteil, z.B. eine Rohrleitung, durchströmt und am Ende dieser Rohrleitung oder aus einem an die Rohrleitung angeschlossenen weiteren Konstruktionsteil, beispielsweise einer Düse, ins Freie austritt. Ein konkretes Beispiel stellt das von einem gesteuerten Roboter ausgeführte Auftragen von Klebstoff längs einer bestimmten Bahn auf einem Werkstück dar. Dieser Vorgang kommt beispielsweise in der Autoindustrie vor beim Auftragen vom Klebstoff oder einer Dichtungsmasse auf der Innenseite des Außenbleches von Autotüren, auf die anschließend das Innenblech der Tür aufgeklebt wird.

Bei der selbsttätigen Ausführung einer solchen Arbeit besteht das Problem sicherzustellen, daß die Flüssigkeit kontinuierlich und ungehindert strömt, also beispielsweise keine teilweise oder vollständige Verstopfung des Strömungskanals vorliegt.

28.3.1985
21 534 PE

0163069

Ein weiteres Problem, insbesondere bei zähen Flüssigkeiten, wie z.B. Klebstoff, besteht häufig darin, daß Gasblasen, (vorzugsweise Luftblasen) in der Flüssigkeit enthalten sind, die prozeßtechnisch nicht akzeptiert werden können. Bei dem obengenannten Beispiel des Auftragens von Klebstoff würden in dem Klebstoff vorhandene Luftblasen, die eine bestimmte Größe überschreiten, zu nicht tolerierbaren Unregelmäßigkeiten und Fehlstellen in der aufgetragenen Klebstoffbahn führen. Ähnliche Probleme können beispielsweise bei der Zuführung von Kunststoffen durch Druckleitungen in Kunststofformen oder bei der Glasherstellung auftreten.

Der Erfindung liegt die Aufgabe zugrunde, ein Verfahren und eine Durchführungsanordnung der eingangs genannten Art zu entwickeln, bei der die strömende Flüssigkeit kontinuierlich darauf überprüft wird, ob sie ungehindert strömt und/oder ob Gasblasen in ihr enthalten sind.

Zur Lösung dieser Aufgabe wird ein Verfahren gemäß dem Oberbegriff des Anspruches 1 vorgeschlagen, welches erfindungsgemäß die im kennzeichnenden Teil des Anspruches 1 genannten Merkmale hat.

Vorteilhafte Weiterbildungen des Verfahrens und Anordnungen zur Durchführung des Verfahrens sind in die Unteransprüchen genannt.

Die Anwendung des Verfahrens und der Durchführungsanordnung gemäß der Erfindung ist grundsätzlich nicht auf zähfließende Flüssigkeit beschränkt. Grundsätzlich können das Verfahren und die Durchführungsanordnung für Flüssigkeiten beliebiger Viskosität verwendet werden. Bei dünnflüssigen Flüssigkeit ergeben sich allerdings größere Probleme bei der Dichtung des Meßsondenkanal.

21 584 PE
0168069

Anhand der in den Figuren gezeigten Ausführungsbeispiele soll die Erfindung näher erläutert werden. Es zeigen:

Figur 1 eine Funktionsskizze zur Erläuterung des Prinzips der Erfindung,

Figur 2a im oberen Teil den Bereich A aus Figur 1 in vergrößerter Darstellung mit einer ersten Ausführungsform einer Anordnung gemäß der Erfindung, und im unteren Teil eine zweite Ausführungsform gemäß der Erfindung,

Figur 2b einen Schnitt längs der Linie I-I in Figur 2a,

Figur 3a im Längsschnitt eine andere Ausführungsform einer Anordnung gemäß der Erfindung,

Figur 3b eine Ansicht der Anordnung gemäß Figur 3a von unten,

Figur 4 das Blockschaltbild eines Ausführungsbeispieles einer Auswerteanordnung für das Meßsignal des Drucksensors.

Eigur 5 ein weiteres Ausführungsbeispiel gemäß der Erfindung mit getrennten Drucksensoren zum Nachweis von Gasblasen einerseits und dem Strömen der Flüssigkeit andererseits.

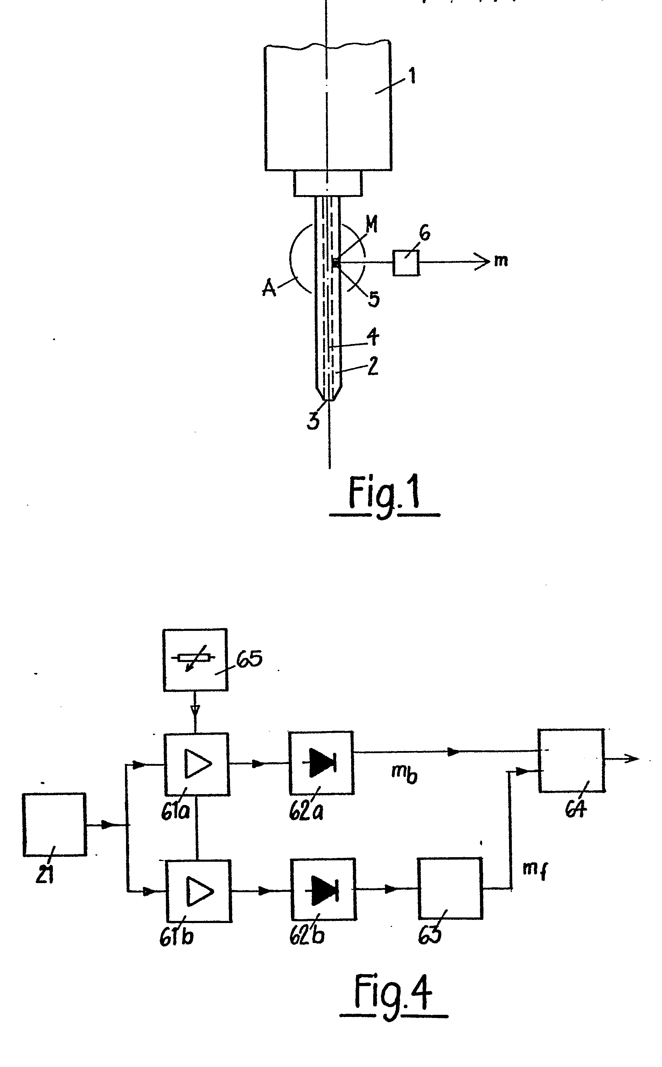

Figur 1 zeigt das Prinzip der Erfindung. Mit 1 ist eine Klebstoffspritzpistole bezeichnet, an die ein Düsenrohr 2 angeschlossen ist, aus dessen Mündung 3 der unter hohem Druck stehende zähflüssige Klebstoff austritt. An der Meßstelle M befindet sich ein Meßsondenkanal 5, durch welchen mittels eines Drucksensors 6 der an dieser Stelle in der Flüssigkeit herrschende Druck gemessen wird.

Wenn sich in der Flüssigkeit eine Gasblase befindet, so dehnt sich diese beim Austritt aus der Mündung 3 des Düsenrohrs explosionsartig aus. Hierbei wird ein Rückimpuls auf die im Düsenrohr befindliche Flüssigkeit ausgeübt, der an der Meßstelle M vom Drucksensor als kurzzeitiger, stoßartiger Druckanstieg erfaßt wird.

Wenn der freie Durchfluß der Flüssigkeit durch das Düsenrohr behindert ist, beispielsweise durch eine vollständige oder teilweise Verstopfung in dem Abschnitt zwischen der Meßstelle M und der Mündung 3, so hat dies einen Druckanstieg an der Meßstelle M zur Folge, wobei dieser Druckanstieg im Verhältnis zu den kurzzeitigen Druckstößen beim Austritt einer Gasblase relativ langsam und kontinuierlich erfolgt.

Wenn eine Blockierung des Flüssigkeitsstromes oberhalb der Meßstelle M auftritt, so ist dies mit einem Druckabfall an der Meßstelle M verbunden.

Durch Aufspaltung des Meßsignals m in seine stoßartigen Anteile und seinen kontinuierlichen oder relativ langsam veränderlichen Anteil kann unterschieden werden, ob eine Änderung des Meßwertes durch Blasen in der Flüssigkeit oder durch eine Verstopfung des Strömungskanals verursacht wird. Eine andere Möglichkeit zur Trennung der beiden Arten von Signalen besteht in der Verwendung von zwei Drucksensoren, die unterschiedliche Ansprecheigenschaften haben.

In Abhängigkeit der Meßwerte können entweder entsprechende Signale gegeben werden oder entsprechende Maßnahmen, z.B. die Stillsetzung der Anlage, eingeleitet werden.

Das Verfahren gemäß der Erfindung liefert auch eine Anzeige, wenn der Nachschub der Flüssigkeit ausbleibt, z.B. bei Erschöpfung des Klebstoffvorrates.

21 584 PE

0163069

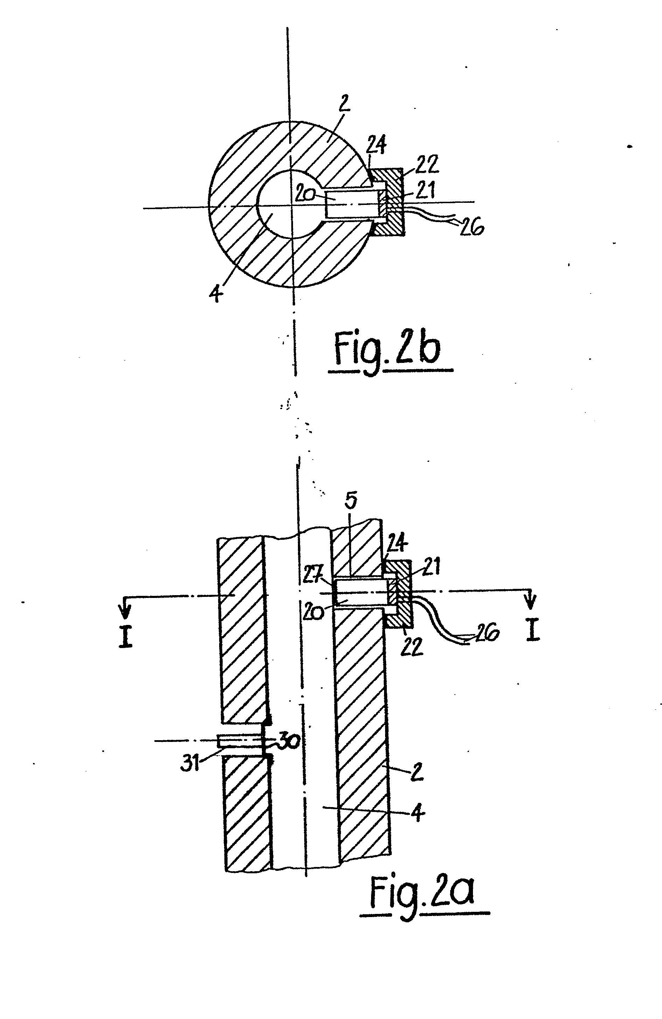

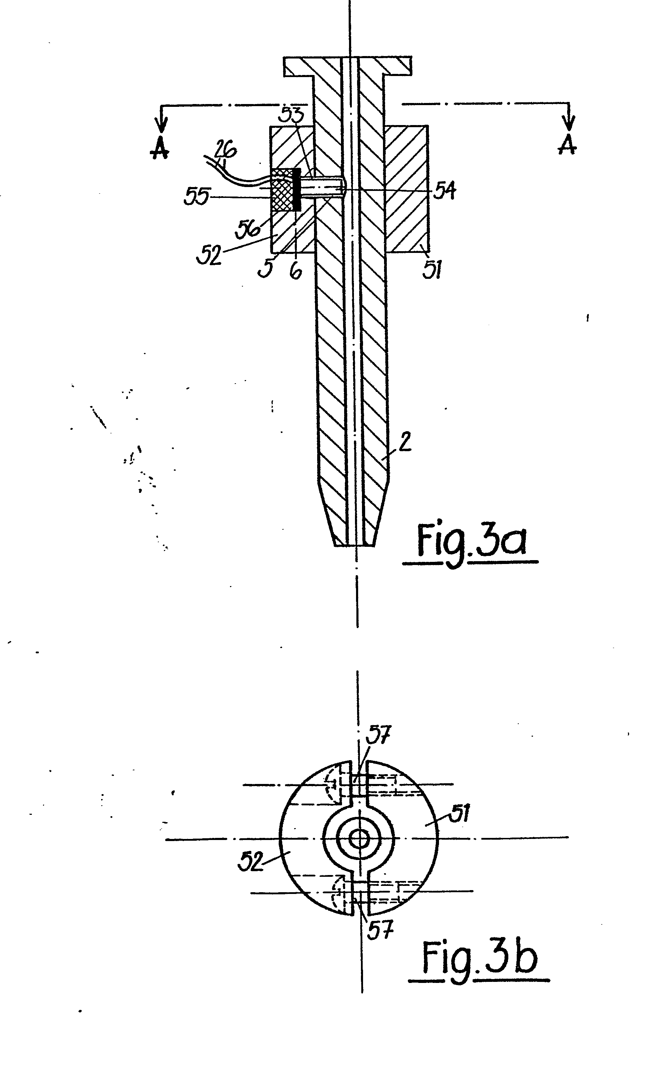

Figur 2a und 2b zeigt ein Ausführungsbeispiel für eine Anordnung zur Durchführung des Verfahrens gemäß der Erfindung. Durch den Kanal 4 eines Transportrohres 2, z.B. eines Düsenrohres, strömt eine unter Druck stehende Flüssigkeit. In der Wand des Transportrohres befindet sich ein Meßsondenkanal 5, in welchem ein druckübertragendes Glied 20 angeordnet ist, dessen Querschnitt dem Querschnitt der Meßsondenkanal angepaßt ist, jedoch um so viel kleiner gehalten ist, daß es möglichst reibungslos in dem Meßsondenkanal gleiten kann. Am äußeren Ende des Gliedes 20 ist dieses dicht mit dem eigentlichen Drucksensor 21, z.B. einem piezoelektrischen Kristall, verbunden. Das Glied 20 und der Drucksensor 21 werden nach außen von einer Haltekappe 22 abgedeckt, die dicht am Rohr 2 anliegt. Zwischen dem Rohr 2 und der Haltekappe 22 ist eine Dichtung 24 vorhanden, die einen Austritt der Flüssigkeit nach außen verhindert. Die Haltekappe 22 wird durch eine in der Figur nicht dargestellte Haltevorrichtung, fest gegen das Rohr 2 gedrückt, so daß die unter Druck stehende Flüssigkeit nicht zwischen Rohr 2 und Haltekappe 22 herausquellen kann. Die Haltevorrichtung kann aus schellenartig aufgebauten Teilen bestehen, die das Rohr 2 umgreifen und miteinander verschraubbar sind, ähnlich wie die in Figur 3a und 3b gezeigte aus zwei Rohrhälften bestehende Haltevorrichtung. Die Flüssigkeit darf ferner nicht zwischen Haltekappe und Sensorelement oder zwischen Sensorelement und druckübertragendem Glied eindringen. Vorzugsweise werden diese Teile dicht und fest miteinander verbunden, z.B. durch Kleben. Die Dichtung 24 kann ebenfalls aus Klebstoff bestehen. Mit 26 sind die vom piezoelektrischen Kristall kommenden, durch die Haltekappe 22 geführten elektrischen Anschlußleitungen des Kristalls bezeichnet.

Wenn es sich um eine zähe Flüssigkeit handelt, wie z.B. Klebstoff, gibt es keine nennenswerten Dichtungsschwierigkeiten. Insbesondere in diesem Falle kann

28.3.1985
21.584 PK
0163069

die wegen ihrer Einfachheit vorteilhafte Ausführungsform nach Figur 3a und 3b verwendet werden, bei der die Sensorteile unmittelbar in der Haltevorrichtung angeordnet sind. Die Haltevorrichtung besteht aus den beiden Hälften 51,52 eines in zwei gleiche Teile in axialer Richtung aufgeschlitzten Rohres. In der einen Rohrhälfte 52 ist eine Bohrung 53 für einen druckübertragenden Stößel 54 vorhanden, die radial außen einen erweiterten Abschnitt 56 hat, in welchem der als piezoelektrischer Kristall ausgebildete eigentliche Drucksensor 6 angeordnet ist. Der Drucksensor 6 ist mit dem Stößel 54 dicht verbunden, beispielsweise durch Kleben. Der Drucksensor 6 ist mittels einer geeigneten Masse 55, beispielsweise Harz, in dem erweiterten Abschnitt 56 der Bohrung dicht eingegossen. Die beiden Rohrhälften 51 und 52 liegen ohne weitere Dichtungsmaßnahmen an der Wand des Düsenrohrs 2 an und werden über geeignete Ausnehmungen durch Schrauben 57 gegen das Düsenrohr 2 gedrückt. Im Prinzip ist der Stößel 54 nicht erforderlich. Ohne Verwendung des Stößels besteht jedoch die Gefahr, daß sich in den Meßsondenkanal 5 bzw. die Bohrung 53 eine Luftblase festsetzt, die das Meßergebnis verfälschen würde.

Bei der Verarbeitung von heißen Flüssigkeiten, z.B. Kunst- oder Klebstoffen, empfiehlt es sich, das druckübertragende Glied 20 bzw. 54 aus Keramikmaterial herzustellen.

Bei zähen Flüssigkeiten kann die Dichtung des Meßsondenkanal gegen Austreten von Flüssigkeit auch dadurch erreicht werden, daß der Stößel 54 in Figur 3a mit guter Passung in den Meßsondenkanal eingeschoben wird. Die erforderliche Dichtung wird dann bereits zwischen dem druckübertragenden Stößel und der Wand des Meßsondenkanals erreicht. Der Stößel 54 wird dabei durch die klemmende Reibung mit der Wand des Meßsondenkanal in seiner Lage im wesentlichen festgehalten. Dadurch wird zwar ein Teil der Kraft, die von der Flüssigkeit auf den Stempel ausgeübt wird, nicht auf den Drucksensor übertragen; dies ist jedoch bei einem piezoelektrischen Kristall nicht schädlich, da seine Verformung minimal ist und der Anteil der nicht übertragenen Kraft bei der Eichung berücksichtigt werden kann. Bei der Verwendung von Drucksensoren, die größere Verformungshübe erfordern, kann das druckübertragende Glied in dem Meßsondenkanal auch mittels eines Klebstoffes, z.B. Silikonmasse, eingeklebt werden, der einer geringen axialen Verschiebung des druckübertragenden Gliedes nur geringe Kräfte entgegensetzt.

Um eine Vorstellung über die möglichen Abmessungen einer Anordnung nach der Erfindung zu bekommen, kann beispielsweise eine Spritzdüse mit 8 mm Außendurchmesser genannt werden, in der der Meßsondenkanal einen Durchmesser von 2 mm hat und das aus den Hälften 51 und 52 bestehende Halterohr einen Durchmesser von 18 mm hat und etwa 15 mm lang ist.

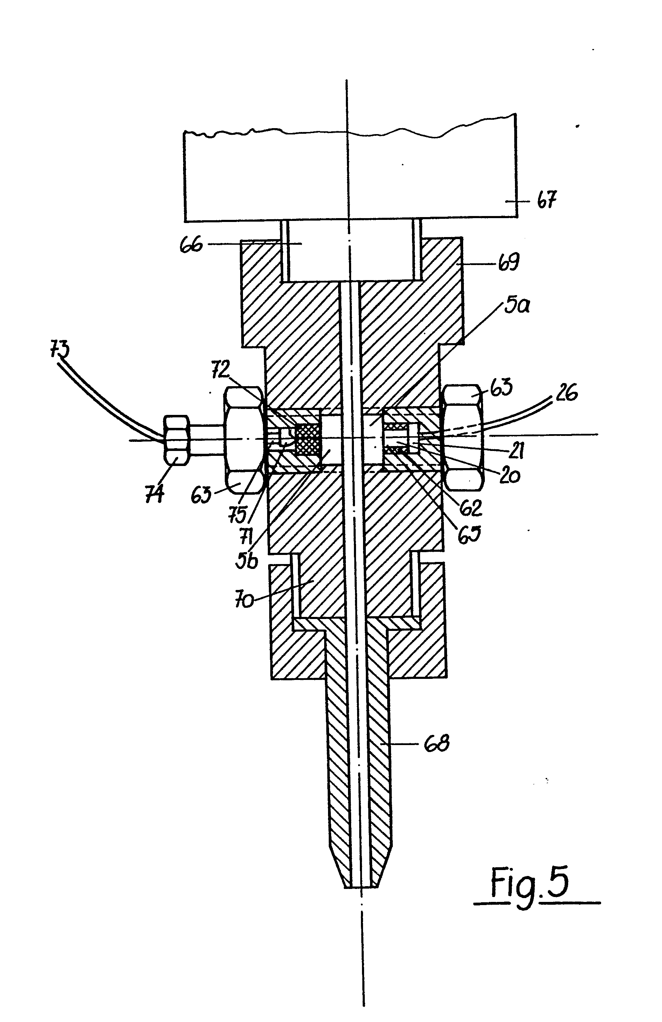

Die Anordnung des Drucksensors kann auch in der in Figur 5 gezeigten Weise erfolgen. Der Drucksensor 21 und das druckübertragende Glied 20 sind in einem Sackloch 62 angeordnet, welches am vorderen Schaftende einer Schraube 63 in Längsrichtung der Schraube eingearbeitet ist. Die Schraube 63 ist in den mit Gewinde versehenen Meßsondenkanal 5a, 5b eingeschraubt. Das druckübertragende Glied 20 ist hierbei - wie oben bereits erläutert - mittels einer Silikonmasse 65 elastisch in dem Sackloch 62 befestigt.

Figur 5 zeigt zugleich, wie der Meßsondenkanal in einem zusätzlichen Adapterteil 69 angeordnet sein kann, welches beispielsweise zwischen dem Düsenaufschraubzapfen 66 einer handelsüblichen Spritzpistole 67 und der Düse 68 eingefügt werden kann, wobei das Adapterteil an seinem unteren Ende einen entsprechenden Aufschraubzapfen 70 für die Düse hat. Verglichen mit der Anordnung des Meßsondenkanal in der Wand der Düse 68, erlaubt das Adapterteil 69 einerseits mehr Freiheit bei der Ausbildung der Meßanordnung und anderer-

28.3.1985.
21 584 PE
0163069

seits wird eine einfache Verwendung der Erfindung bei handelsüblichen Spritzpistolen und Spritzdüsen ermöglicht.

Der Drucksensor kann im Prinzip auch in der Weise aufgebaut sein, daß in dem Meßsondenkanal eine Membran 30 angeordnet ist, die dichtend an die Wand des Meßsondenkanals angeschlossen ist. Beispielsweise kann man sich eine topfförmige Membran vorstellen, wie sie in Figur 2 mit 30 bezeichnet ist. An die Membran 30 kann ein Stößel 31 angeschlossen sein, der die Kraft auf ein fest gelagertes Sensorelement überträgt. Eine solche Ausführungsform kommt bei größeren Abmessungen des Konstruktionsteils 2 und des Strömungskanals 4 in Betracht.

Die Auswertung des vom Drucksensor gelieferten Meßsignals m erfolgt vorzugsweise elektronisch. Ein als Drucksensor verwendeter piezoelektrischer Kristall liefert für das Strömen der Flüssigkeit einen relativ kleinen kontinuierlichen Ausgangswert, und beim Austreten einer Gasblase aus der Mündung 3 des Strömungskanals ein stoßartiges, kurzfristiges, relativ großes Signal. Eine Möglichkeit zur Trennung dieser Signale besteht in der Verwendung entsprechender Frequenzpaßfilter. Eine andere, besonders einfache Schaltung zur Trennung der Signale zeigt Figur 4. Das von einem piezoelektrischen Kristall 21 gelieferte elektrische Signal wird auf zwei Verstärker 61a und 61b gegeben, von denen der Verstärker 61a eine geringe Verstärkung hat und zur Erfassung von Gasblasen dient, während der Verstärker 61b eine hohe Verstärkung hat und zur Erfassung des Fließens der Flüssigkeit dient. Die Ausgangssignale der Verstärker werden über Gleichrichter 62a und 62b gleichgerichtet. Dem Gleichrichter 62b ist ein Signalbegrenzungsglied nachgeschaltet, durch das die sehr große Verstärkung der auch auf dem Verstärker 61b gelangenden Gasblasensignale unterdrückt wird. Die Ausgangsgrößen $m_b$ und $m_f$ der Glieder 62a und 63 können dann auf getrennte Anzeigeglieder oder Steuerglieder gegeben werden. Sie können aber auch auf ein gemeinsames Signalanpassungsglied zur zunächst gemeinsamen weiteren Verarbeitung gegeben werden, bis sie danach zur Anzeige erneut voneinander getrennt werden. Zur Anzeige der beiden Meßwertkomponenten können Leuchtdioden-Bandanzeigen verwendet werden, und zwar entweder je eine für die beiden Meßwertkomponenten oder eine gemeinsam für beide Meßwerte, wobei abwechselnd der eine und der andere Meßwert angezeigt wird.

Durch das Einstellglied 65 in Figur 4 kann der Verstärkungsgrad des Verstärkers 61a der Viskosität der jeweiligen Flüssigkeit angepaßt werden, da der beim Austreten einer Gasblase zum Drucksensor wandernde Druckimpuls in Abhängigkeit der Viskosität der Flüssigkeit unterschiedlich stark gedämpft wird.

Figur 5 zeigt auch eine Ausführungsform der Erfindung mit zwei Meßsondenkanälen 5a und 5b, die in dem Ausführungsbeispiel aus Fertigungsgründen einander diametral gegenüberliegend angeordnet sind. In dem Meßsondenkanal 5a ist ein vorzugsweise piezoelektrisch arbeitender Drucksensor 21 vorhanden, der im wesentlichen nur auf die kurzfristigen und stoßartigen Druckänderungen anspricht, die von austretenden Luftblasen erzeugt werden. Die hierdurch ausgelösten Druckimpulse sind relativ groß im Vergleich zu dem von der kontinuierlich strömenden Flüssigkeit verursachten Signal. Dadurch, daß die Empfindlichkeit des Drucksensors 21 niedrig eingestellt wird, werden von diesem Drucksensor praktisch nur die von den Gasblasen herrührenden, stoßartig auftretenden Signale registriert. In dem anderen Meßsondenkanal 5b ist ein Drucksensor vorhanden, der nur auf langsam veränderliche Druckänderungen anspricht und zum Nachweis des Strömens der zähen Flüssigkeit verwendet wird. In dem gezeigten Ausführungsbeispiel enthält dieser Drucksensor ein elektrischen Kontaktpaar 71, wobei die

28.3.1985
21 584 PE
0163069

Kontakte über ein elastisches druckübertragendes Glied 72 geschlossen werden, solange der Druck der Flüssigkeit einen bestimmten Mindestwert überschreitet. Selbstverständlich kann das Kontaktpaar 71 auch als Ruhekontakt ausgebildet sein, so daß die Kontakte geöffnet werden, wenn die Flüssigkeit in der gewünschten Weise strömt. Das über die elektrische Zuleitungen 73 gewonnene Zweipunkt-Signal kann zur Anzeige bzw. zur Auslösung von Steuervorgängen verwendet werden. Mittels einer Stellschraube 74, die mit ihrer Spitze 75 durch den Kopf der Schraube 63 hindurchgeführt ist, kann der Ansprechempfindlichkeit des elektrischen Kontaktes 71 eingestellt werden.

Patentansprüche

1. Verfahren zur Feststellung des ungehinderten Strömens einer unter Druck stehenden Flüssigkeit und/oder des Vorhandenseins von Gasblasen in der genannten Flüssigkeit, welche ein mit einer Austrittsöffnung für die Flüssigkeit versehenes Konstruktionsteil durchströmt, dadurch gekennzeichnet, daß durch einen Meßsondenkanal in der Wand des Konstruktionsteils der in der Flüssigkeit herrschende Druck mittels mindestens eines Drucksensors abgetastet wird und daß das Ausgangssignal des Drucksensors auf ein anzeigendes oder steuerndes Gerät gegeben wird.

2. Verfahren nach Anspruch 1, dadurch gekennzeichnet, daß das Drucksignal des Drucksensors oder das in ein elektrisches Signal umgewandelte Drucksignal in seine kurzfristig und stoßartig auftretende Komponente einerseits und seine langsam veränderliche Komponente andererseits aufgespalten wird und daß die Komponenten getrennt zur Anzeige gebracht oder zur Steuerung verwendet werden.

3. Verfahren nach Anspruch 1, d a d u r c h   g e k e n n - z e i c h n e t, daß zwei Drucksensoren vorhanden sind, von denen einer eine geringe Empfindlichkeit hat und praktisch nur auf die von Gasblasen herrührenden kurzfristig und stoßartig auftretenden Druckänderungen anspricht, und daß der andere Drucksensor eine hohe Empfindlichkeit hat, jedoch lediglich auf längerfristig wirkende Drücke anspricht.

4. Anordnung zur Durchführung des Verfahren nach einem der vorhergehenden Ansprüche, dadurch gekennzeichnet, daß in der Wand (2) des Konstruktionsteils mindestens ein Meßsondenkanal (5) vorhanden ist, in welchem ein druckübertragendes Glied (20, 54, 30, 31) angeordnet ist, über welches der in der Flüssigkeit herrschende Druck auf einen Drucksensor (21)
übertragbar ist.

5. Anordnung nach Anspruch 4, dadurch gekennzeichnet, daß
der Drucksensor ein piezoelektrische Kristallkörper (21)
ist, der ein von dem Druck der Flüssigkeit abhängiges elektrisches Signal erzeugt.

6. Anordnung nach einem der Ansprüche 4 oder 5, dadurch gekennzeichnet, daß das im Meßsondenkanal (5) angeordnete
druckübertragende Glied (20,31,54) ein Stempel ist, dessen
Querschnitt dem Querschnitt des Meßsondenkanals angepaßt ist
und der in Längsrichtung möglichst reibungslos in dem Meßsondenkanal verschiebbar ist.

7. Anordnung nach einem der Ansprüche 4 oder 5, dadurch
gekennzeichnet, daß das druckübertragende Glied eine im
Meßsondenkanal angeordnete Membran (30) ist, über die der in
der Flüssigkeit herrschende Druck direkt oder über einen
Stößel (31) auf den Drucksensor übertragbar ist.

8. Anordnung nach einem der Ansprüche 4 - 6, dadurch gekennzeichnet, daß der Meßsondenkanal(5) und der darin bzw. in
seiner Verlängerung angeordnete Drucksensor von außen von
einer Haltekappe (22) umgeben ist, die der Wand des Konstruktionsteils (2) angepaßt ist, dichtend gegen diese anliegt und ein Widerlager für den unter Druck stehenden
Drucksensor bildet.

9. Anordnung nach Anspruch 8, dadurch gekennzeichnet, daß
die Haltekappe (22) mittels einer Haltevorrichtung an dem
Konstruktionsteil festschraubbar ist.

10. Anordnung nach Anspruch 9, dadurch gekennzeichnet, daß
Haltekappe und Haltevorrichtung in einem Bauteil (52)
integriert sind, welches mit seiner dem Konstruktionsteil

28.3.1985
21 584 PE
0163069

(2) zugewandten Seite der Wand des Konstruktionsteils angepaßt ist, daß dieses Bauteil (52) eine abgesetzte Bohrung (56,53) enthält, in deren innen liegenden, im Durchmesser kleineren Teil ein druckübertragender Stößel (54) angeordnet ist, während am Boden des äußeren, im Durchmesser größeren Teils (56) ein vorzugsweise als piezoelektrischer Kristall ausgebildeter Drucksensor angeordnet ist, der mittels einer Masse (55) eingegossen ist.

11. Anordnung nach Anspruch 10, dadurch gekennzeichnet, daß das Bauteil (52) als die eine Hälfte eines aufgeschlitzten Rohres (51,52) ausgebildet ist, die mit der anderen Hälfte (51) des Rohres an das als Rohr ausgebildete Bauteil (2) klemmend anschraubbar ist.

12. Anordnung nach einem der Ansprüche 4 - 11, dadurch gekennzeichnet, daß das druckübertragende Glied (20, 54) mit einer bei zähen Flüssigkeiten dichtenden Passung in den Meßsondenkanal (5) eingesetzt ist.

13. Anordnung nach einem der Ansprüche 4 - 7, d a - d u r c h   g e k e n n z e i c h n e t , daß das druckübertragende Glied (20) und der Drucksensor (21) in einem Sackloch (62) einer Schraube (63) angeordnet sind, welche in den mit Gewinde versehenen Meßsondenkanal (5) einschraubbar ist.

14. Anordnung nach einem der Ansprüche 4 oder 6 bis 13 zur Durchführung des Verfahrens nach Anspruch 3, d a d u r c h   g e k e n n z e i c h n e t , daß der in einem Meßsondenkanal (5b) angeordnete Drucksensor ein elektrischer Kontakt (71) ist, der über ein vorzugsweise aus elastischem Kunststoff bestehendes druckübertragendes Glied (72) in einer die Kontaktstellung bestimmenden Weise vom Druck der strömenden Flüssigkeit beaufschlagt wird.

15. Anordnung nach einem der Ansprüche 4 - 14, d a -
d u r c h   g e k e n n z e i c h n e t, daß das Konstruktionsteil mit dem/den Meßsondenkanal/Meßsondenkanälen ein
Adapterteil (69) ist, welches in ein handelsübliches
Arbeitsgerät, z.B. zwischen einer Spritzpistole (67) und der
Düse (68), einsetzbar ist.

16. Anordnung nach einem der Ansprüche 4-15, dadurch gekennzeichnet, daß die Anordnung für eine zähe Flüssigkeit, insbesondere Klebstoff oder Kunststoff, verwendet wird.

17. Anordnung nach einem der Ansprüche 4-13, dadurch gekennzeichnet, daß das von einem piezoelektrischen Kristall
gelieferten elektrischen Signals oder das von einem
Drucksensor anderer Art in ein elektrisches Signal
umgewandelte Drucksignal zur Auswertung auf zwei parallel
geschaltete Verstärker (61a,61b) gegeben wird, von denen der
eine (61a) eine geringe Verstärkung und der andere (61b)
eine große Verstärkung hat und daß dem letztgenannten
Verstärker (61b) ein Signalbegrenzungsglied (63)
nachgeschaltet ist.

Fig.1

Fig.4

28.3.1985
21 584 PB
0163069

Fig.2b

Fig.2a

28.3.1985
21 564 PE
0163069

**A**

**A**

53

26

55

54

56

52

5  6

51

2

**Fig.3a**

57

51

52

57

**Fig.3b**

21 584 PE

**0163069**

Fig.5

**Europäisches Patentamt**

## EUROPÄISCHER RECHERCHENBERICHT

EP  85 10 4127

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE-C- 172 574 (FELTEN & GUILLEAUME)<br><br>* Seite 1, Zeilen 25-68; Figuren * | 1,4,7, 9,14, 15 | G 01 P 13/00 |
| X | FR-A- 441 794 (COMPAGNIE POUR LA FABRICATION)<br>* Insgesamt; Figuren 1,4 *. | 1,4,7, 14 | |
| X | US-A-4 072 934 (HILLER et al.)<br>* Spalte 4, Zeile 28 - Spalte 6, Zeile 10; Figuren 2,4 * | 1,2,4 | |
| A | | 17 | |
| A | US-A-2 561 763 (WATERS et al.)<br><br>* Spalte 1, Zeilen 28-42; Spalte 2, Zeile 33 - Spalte 3, Zeile 36; Figuren 1,2,4 * | 4-6,8, 10,12 | RECHERCHIERTE SACHGEBIETE (Int. Cl.4)<br><br>G 01 P |
| A | US-A-3 068 694 (B.A. WORSWICK)<br><br>* Spalte 2, Zeilen 31-67; Figuren 3,5 * | 4-6,8, 9,13 | |
| A | DE-A-1 930 497 (LAUN)<br>* Seite 2, Zeilen 6-11; Figuren * | 2 | |

*Der vorliegende Recherchenbericht wurde für alle Patentansprüche erstellt.*

| Recherchenort<br>DEN HAAG | Abschlußdatum der Recherche<br>25-07-1985 | Prüfer<br>HANSEN P. |
|---|---|---|